# EUROPÄISCHE PATENTANMELDUNG

(11) **EP 1 103 182 A2**
(43) Veröffentlichungstag der Anmeldung: **30.05.2001**
(21) Anmeldenummer: 00123800.5
(22) Anmeldetag: 02.11.2000
(51) Int. Cl.: A21B 1/26

(54) **Backofen**

(30) Priorität: 03.11.1999 DE 19953040
(71) Anmelder: MIWE Michael Wenz GmbH, 97450 Arnstein (DE)
(72) Erfinder: Bremer, Adam, Dipl.-Ing, 97450 Amstein (DE)
(74) Vertreter: Böck, Bernhard, Dipl.-Ing.

(57) **Zusammenfassung**

Die Erfindung betrifft einen Backofen zum Backen von Teigrohlingen mit vorzugsweise mehreren in einem Backraum übereinander angeordneten Backetagen, deren obere bzw. untere Begrenzungen bzw. jeweils von Radiatoren gebildet werden. Die Radiatoren werden vorzugsweise mittels Heißluft erwärmt, die nach dem Passieren der Radiatoren in den Backraum eingeleitet wird. Die Strömungsführung der Heißluft führt zu einer Beaufschlagung der Teigrohlinge mit Wärme sowohl aus Strahlung, aus turbulenter Konvektion als auch aus direkter Wärmeleitung dergestalt, dass beim Backen die gesamte freie Oberfläche der Backware eine gleichmäßige Backkruste sowie die Bodenfläche der Backware gleichzeitig eine der Backkruste entsprechende gleichmäßige Backbodenstärke erhält. Mittels einer zwischen Backofentür und Backraum angeordneten, verstellbaren Umlenkvorrichtung lässt sich die Heißluft nach dem Durchströmen der Radiatoren den Backanforderungen entsprechend in einstellbaren Massenstromverhältnissen auf die einzelnen Backetagen verteilen.

## Beschreibung

Die Erfindung betrifft einen Backofen mit mindestens einer Backetage gemäß den Merkmalen des Oberbegriffs des Schutzanspruchs 1.

Beim Backen von Teigrohlingen kommen insbesondere im gewerblichen Bereich in den meisten Fällen Backöfen mit mindestens einer, meist jedoch mehreren übereinander angeordneten Backetagen zum Einsatz, wobei die Backware im Backraum durch eine Kombination aus Wärmeübertragung durch Konvektion und Strahlung mit Wärme beaufschlagt wird.

Es sind Backöfen bekannt, die die Wärme an das Backgut entweder hauptsächlich durch Strahlung bei ruhender Backatmosphäre oder hauptsächlich durch Konvektion mittels bewegter Luft und damit bei bewegter Backatmosphäre übertragen. Bei Backöfen mit Strahlungswärmeübertragung erfolgt die Beheizung vorwiegend durch ober- und unterhalb der Backgutträger angeordnete Heizradiatoren.

Diese Backöfen besitzen die Eigenschaft, dass die Backware beim Backvorgang auf einem von der Unterhitze intensiv beheizten Backgutträger aufliegt, der vorwiegend aus steinähnlichem Material, aber auch aus Metall bestehen kann, wobei die Backware ihre Bodenwärme durch direkte Berührung vom höher temperierten Backgutträger erhält. Hierdurch erhält man einen gut durchgebackenen Backgutboden. Die Oberhitze wird vom oberhalb der Backware angeordneten Heizradiator hauptsächlich durch Strahlungswärme an das Backgut übertragen; der geringe Anteil konvektiver Wärme durch innere selbsttätige Konvektion der Backraumatmosphäre ist für die Backqualität vernachlässigbar.

Nachteilig bei Backöfen mit Strahlungswärmeübertragung ist jedoch, dass die seitlich freiliegenden Oberflächen der Backware nur von einem geringen diffusen Strahlungsanteil beaufschlagt werden, da die direkte Strahlungswärme der Oberhitze im wesentlichen lotrecht von oben auf die Backware wirkt. Die seitlichen Flächen der Backware hingegen erhalten die geringere diffus reflektierte Wärmemenge, was die Krustenbildung an den Seiten der Backware beeinträchtigen kann.

Es sind weiterhin Backöfen bekannt, die mit Wärmeübertragung durch Konvektion betrieben werden, auch bezeichnet als Heißluft- bzw. Umluftbacköfen. Bei diesen Backöfen mit bewegter Backatmosphäre wird die im Backraum und im Heizsystem befindliche Luft mittels Ventilator in einem geschlossenen Kreislauf mit verhältnismäßig hoher Geschwindigkeit umgewälzt. Die Luft wird dabei an einer Seite oder an der Rückwand des Backraums abgesaugt, durch den Ventilator zur Wärmeaufnahme über ein Heizregister geleitet und an anderer Stelle dem Backraum wieder zugeführt.

Die umgewälzte Heißluft strömt beim Backvorgang durch die von den Backblechen gebildeten Zwischenräume und umfließt damit die einzelnen Backstücke. Aufgrund der hier eingesetzten relativ hohen Strömungsgeschwindigkeit entsteht eine turbulente Strömung, die die Backstücke allseits, jedoch nicht an dem auf dem Backgutträger aufliegenden Boden, umströmt. Nachteilig ist dabei, dass hierdurch an die freien Flächen der Backware mehr Wärme gelangt als an den Boden der Backware, da die Wärme dort zunächst den Wärmeleitwiderstand der Backbleche überwinden muss, bevor sie in die Backware geleitet werden kann.

Dies hat im allgemeinen zur Folge, dass der Backwarenboden zu schwach gebacken wird und sich deshalb bei Abkühlung und Nachtrocknen der Backware aufgrund der zu geringen Stärke mehr oder weniger einzieht und hohl wird. Hierdurch wird die Qualität der Backware nachteilig beeinflusst.

Stand der Technik ist es, anstatt vollflächig geschlossener Backbleche perforierte bzw. Lochbleche einzusetzen, wodurch der Wärmedurchgangswiderstand der Backbleche und damit die geschilderten Nachteile geringfügig verringert werden. Jedoch tritt hierdurch ein zusätzlicher Nachteil auf, indem sich die Backwaren bei der Verwendung von Lochblechen im anfänglichen teigförmigen Zustand in die Löcher eindrücken, was nach dem Backen unansehnliche Noppen hinterlässt, die um so dunkler gefärbt sind, je tiefer sie sich in die Löcher des Backblechs eingedrückt haben.

Ausgehend vom Stand der Technik einerseits der Backöfen mit Wärmeübertragung durch Strahlung und andererseits der Backöfen mit Wärmeübertragung durch Konvektion ist es die Aufgabe der vorliegenden Erfindung, einen gattungsgemäßen Backofen zu schaffen, mit dem die Backware durch geeignete Kombination von Wärmeübertragung durch Strahlung, Konvektion und Wärmeleitung eine allseitig gleichmäßige Backkruste sowie eine der Backkruste entsprechende gleichmäßige und ausreichende Backbodenstärke erhält. Diese Aufgabe wird durch einen Backofen nach der Lehre des Patentanspruchs 1 gelöst.

Vorteilhafte Ausgestaltungen der Erfindung sind Gegenstand der Unteransprüche.

Der Backofen der Erfindung weist zunächst in an sich bekannter Weise ein Gehäuse mit einem Backraum auf. Erfindungsgemäß kommt eine spezifische Kombination aus Wärmeleitung, Strahlungswärme- und Konvektionswärmeübertragung auf die Backware zum Einsatz. Die im Backraum wahlweise fest oder lose eingesetzten Backgutträger werden dabei von unten mit einer erhöhten Wärmemenge beaufschlagt, wodurch der Wärmedurchgangswiderstand der Backgutträger kompensiert wird. Damit lässt sich die Wärmemenge, die an den Backwarenboden geleitet wird, an diejenige Wärmemenge annähern, die mittels Konvektion und Strahlung an die freiliegende Oberfläche der Backware gelangt.

Der Backofen der Erfindung weist im Backraum mindestens eine, vorzugsweise jedoch mehrere Backetagen auf, die auf ihrer Ober- und Unterseite vorzugsweise jeweils durch Radiatoren begrenzt werden. Diese Radiatoren beaufschlagen die Backware zunächst an ihrer freiliegenden Oberfläche mit Wärmestrahlung. Die Umwälzung der im Backofen und im Heizsystem befindlichen Heißluft führt zusätzlich zu Wärmeübertragung auf die freiliegende Oberfläche der Backware mittels erzwungener turbulenter Konvektion. Darüber hinaus beaufschlagt ein die Bodenfläche einer Backetage bildender Radiator den Backgutboden mittels direkter Wärmeleitung mit Wärme. Somit wird die Backware im erfindungsgemäßen Backofen an ihrer freiliegenden Oberfläche kombinierter Wärmeübertragung durch Konvektion sowie Strahlung, und zusätzlicher Wärmeübertragung durch direkten Kontakt an ihrer Bodenfläche ausgesetzt, in der Art, dass die freiliegende Oberfläche der Backware eine gleichmäßige Backkruste sowie die Bodenfläche des Backguts gleichzeitig eine der Backkruste entsprechende gleichmäßige Backbodenstärke erhält.

Gemäß einem bevorzugten Ausführungsbeispiel der Erfindung bildet eine erste Radiatorwand gleichzeitig Oberhitze und obere Begrenzung einer Backetage. Nach einem weiteren bevorzugten Ausführungsbeispiel werden die Teigrohlinge, die sich in einer Backetage befinden, unmittelbar auf eine zweite, die untere Begrenzung der Backetage und damit gleichzeitig Unterhitze und Backplatte darstellende Radiatorwand aufgesetzt.

Gemäß einem besonders bevorzugten Ausführungsbeispiel der Erfindung werden die Radiatoren, die gleichzeitig die oberen und unteren Begrenzungen einer Backetage darstellen, mittels eines Heißgasstroms mit Wärme beaufschlagt. Der Heißgasstrom wird dabei vorzugsweise mittels Ventilator zwischen Radiator und einem Heizelement umgewälzt und gibt beim Durchströmen des Radiators einen Teil seiner Wärmeenergie von innen an die Radiatorwände ab.

Bevorzugt wird der einen Radiator erwärmende Heißgasstrom in grundsätzlich beliebiger Weise nach dem Passieren des Radiators jeweils in eine Backetage eingeleitet. Bevorzugt kann hierzu eine Einrichtung zur Umlenkung oder Drosselung des Heißgasstroms im Weg des Heißgasstroms angeordnet sein, durch welche sich die Durchflussmenge des in eine Backetage geleiteten Heißgasstroms einstellen lässt.

Hierbei kann die Vorrichtung zur Einstellung der Durchflussmenge des Heißgasstroms insbesondere so angeordnet sein, dass der aus einem Radiator austretende Heißgasstrom mittels eines Verstellelements in einem variablen Massenstromverhältnis auf verschiedene Backetagen verteilt werden kann. Vorzugsweise ist das Verstellelement zur Regulierung der Durchflussmenge des in eine oder mehrere Backetagen geleiteten Heißgasstroms dabei linienartig langgestreckt ausgebildet und erstreckt sich über die gesamte Breite einer Backetage.

Nach einem bevorzugten Ausführungsbeispiel der Erfindung erfolgt die Einstellung und Verteilung des Heißgasstroms auf unterschiedliche Backetagen mittels eines Umlenkelements, das bevorzugt von außen verstellbar ist. Auf diese Weise lässt sich im Betrieb des Backofens durch den Bediener eine den Backbedingungen angepasste Wärmeverteilung auf die einzelnen Backetagen vornehmen.

Nach einem weiteren bevorzugten Ausführungsbeispiel der Erfindung können die Radiatorwände, die die Backplatten bilden, auf welche die Backware aufgesetzt wird, herausnehmbar gestaltet sein. Sie sind damit gegen Backplatten aus anderen Materialien, insbesondere aus Stein, austauschbar. Die Dicke und das Material der verwendeten Backplatten kann hierdurch dem Verwendungszweck und den angestrebten Backeigenschaften jeweils angepasst werden.

Nach einem alternativen Ausführungsbeispiel kann die Backware auch mittels eines gesonderten, leicht entnehmbaren Backgutträgers auf die Backplatte aufgesetzt werden.

In einem weiteren Ausführungsbeispiel der Erfindung ist die nach unten weisende Radiatorwand des die obere Begrenzung einer Backetage bildende Radiators, welcher von innen mit Wärme durch Heißgas beaufschlagt wird, mit einer Vielzahl von Durchbrüchen versehen, durch die eine Teilströmung des Heißgasstroms die Radiatorwand passieren und auf diese Weise direkt in den Backraum eintreten kann.

Hierdurch lässt sich einem zu großen Temperaturabfall der zunächst durch die Radiatoren geleiteten und von dort in die Backetage geführten Heißluft entgegenwirken. Der durch den Backraum strömenden, bereits kälteren Heizluft wird durch die Durchbrüche der Radiatorwand jeweils eine Teilmenge noch heißerer Heizluft beigemischt, was zu einer über die ganze Backfläche der jeweiligen Backetage gleichförmigeren Temperaturverteilung beiträgt.

Die einzelnen Backetagen des Backofens der Erfindung sind nach oben sowie nach unten vorzugsweise durch die Radiatoren, die gleichzeitig die Ober- bzw. Unterhitze darstellen, begrenzt. Zu den Seiten sind die Backetagen durch die seitlichen Wände des Backraums begrenzt. Auch die Begrenzung der Backetagen nach hinten wird durch eine Backraumwand hergestellt. Eine Begrenzung der Backetage nach vorne wird durch die Backofentür gebildet. Ebenso vorzugsweise an der zur Tür weisenden Vorderseite der Backetagen sind die Vorrichtungen zu Steuerung und Verteilung des aus den Radiatoren nach vorne austretenden Heißgas stroms auf die einzelnen Backetagen angeordnet.

Um hierbei ein unkontrolliertes Überströmen von Heißgas zwischen verschiedenen Backetagen an deren Vorderseite zu unterbinden, sind nach einem bevorzugten Ausführungsbeispiel der Erfindung Dichtungen in zunächst grundsätzlich beliebiger Weise so angebracht, dass bei geschlossener Backofentür die einzelnen Backetagen im wesentlichen luftdicht voneinander abgetrennt sind. Nach einem besonders bevorzugten Ausführungsbeispiel sind die Dichtungen dabei horizontal angeordnet, verlaufen parallel zu den Umlenkelementen zur Verteilung der Heißluft auf die einzelnen Backetagen und können an der Innenseite der Backofentür zur Anlage gebracht werden.

Nachfolgend wird der Backofen anhand lediglich bevorzugte Ausführungsformen darstellender Zeichnungen näher erläutert. Es zeigt:
- **Fig. 1**: einen erfindungsgemäßen Backofen mit Heißluftumwälzeinrichtung in schematischer seitlicher Schnittdarstellung, geschnitten entlang der in **Fig. 2** angegebenen Schnittlinie B-B;
- **Fig. 2**: den Backofen gemäß **Fig. 1** in einer **Fig. 1** entsprechenden Darstellung in Draufsicht, geschnitten entlang der in **Fig. 1** angegebenen Schnittlinie A-A; und
- **Fig. 3**: in einer **Fig. 1** entsprechenden Darstellung ein weiteres Ausführungsbeispiel eines erfindungsgemäßen Backofens mit durchbrochenen oberen Radiatorwänden.

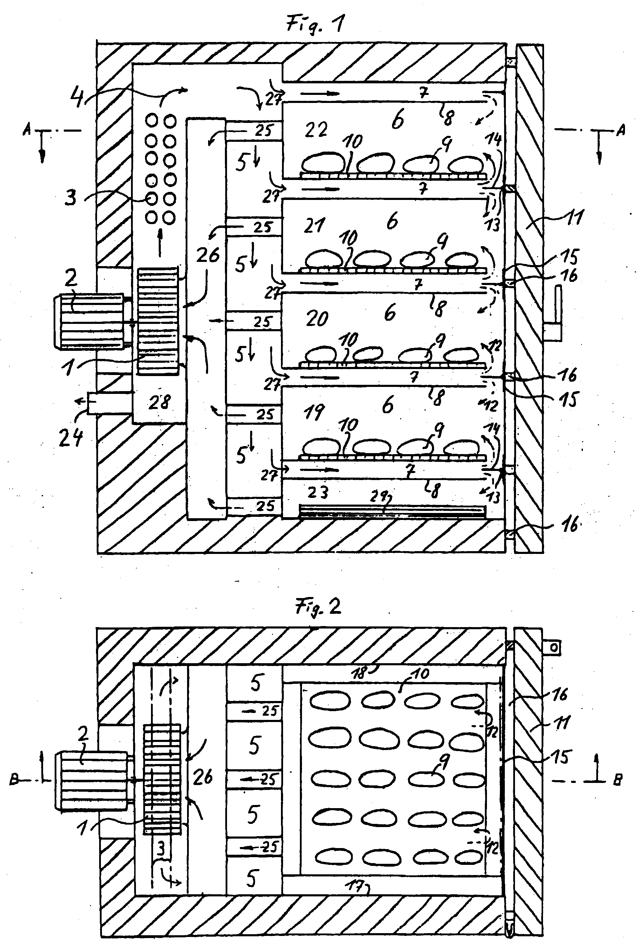

Der in **Fig. 1** höchst schematisch dargestellte Backofen weist ein Umluftgebläse 1 auf, das von einem Elektromotor 2 angetrieben wird. Die im Backofen umgewälzte Luft 4 wird von einem im Luftstrom angeordneten Wärmetauscher 3 erwärmt, dem auf der Primärseite mittels elektrischem Strom, über die Heizgase eines Öl- oder Gasbrenners oder auch mittels Thermoöl, das in einem Heizkreislauf zirkuliert, in bekannter Weise die Wärme zugeführt wird.

Die im Wärmetauscher erwärmte Luft 4 strömt durch den Vorlauf im Verteilerkanal 5 zu den im eigentlichen Backraum 6 beabstandet angeordneten Radiatoren 7 und gibt dort bei der Durchströmung der Radiatoren 7 von hinten nach vorne einen Teil ihrer Wärme durch die Radiatorenwände 8 bzw. 10 hindurch an den Backraum 6 bzw. an das Backgut 9 ab.

Beim Passieren der erwärmten Luft 4 durch einen die obere bzw. untere Begrenzung einer Backetage 19, 20, 21, 22 darstellenden Radiator 7 erfolgt die Wärmeübertragung nach unten mittels Konvektion an die Radiatorwand 8, mit anschließender Wärmeleitung durch die Radiatorwand 8 hindurch und dann vom Radiator 7 an den Backraum 6 durch Strahlung sowie Konvektion.

In ähnlicher Weise erfolgt die Wärmeübertragung von der erwärmten Luft 4 nach oben an die obere Radiatorwand 10, die gleichzeitig eine der Backplatten 10 darstellt, durch Konvektion, anschließende Wärmeleitung durch die Radiatorwand bzw. die Backplatte 10 hindurch und von dieser mittels Wärmeleitung unmittelbar an den auf der Backplatte 10 liegenden Boden der Backware 9.

Die Backplatte 10 kann hierbei unmittelbar die obere horizontale Radiatorwand darstellen und mit dem Radiator 7 fest verbunden sein, sie kann jedoch ebenso anhand von rund um die Backplatte 10 verlaufenden, nicht gezeichneten Dichtungen lose und damit herausnehmbar in die Backetage 19, 20, 21, 22 eingelegt sein.

Nach einem weiteren Ausführungsbeispiel der Erfindung ist die eigentliche Backplatte 10 getrennt von der oberen Radiatorwand und wird lose auf letztere aufgelegt. Die jeweilige Ausführung ist abhängig vom Werkstoff der Backplatten 10 und der damit verbundenen Wärmeleitfähigkeit. Es können somit auch Backplatten 10 aus verschiedenen Materialien, zum Beispiel aus Stahl oder Stein, die jeweils gegeneinander auswechselbar sind, verwendet werden.

Im Bereich der im Backofen nach vorne weisenden Enden der Radiatoren 7, die der Backraumtür 11 zugewandt sind, sind die Radiatoren 7 mit einer im wesentlichen schlitzförmigen, hier senkrecht zur Zeichenebene verlaufenden Öffnung 12 ausgestattet und über die ganze Breite dieser Öffnung 12 mit einer um eine Achse 13 schwenkbar gelagerten Einstellvorrichtung 14 versehen, die es ermöglicht, die aus den Radiatoren 7 austretende Heißluft in verschiedenen Massenstromverhältnissen sowohl anteilsmäßig nach oben und unten, als auch insgesamt nur nach oben oder insgesamt nur nach unten umzulenken und die Heißluft damit in die einzelnen Backetagen 19, 20, 21, 22 einzuleiten.

In Richtung auf die Backraumtür 11 ist parallel zur Achse 13 der Einstellvorrichtung 14 ein über die ganze Breite des Backraums 6 verlaufendes Profil 15 angeordnet, welches in Verbindung mit der jeweiligen Stellung der Einstellvorrichtung 14 die Umlenkung der Heißluft bewirkt. Das Profil 15 dient hierbei gleichzeitig als Träger für die türseitig auf dem Profil 15 angebrachte Dichtung 16, die bei geschlossener Backraumtür 11 an der Backraumtür 11 anliegt und somit unerwünschte Überströmungen von Heißluft zwischen benachbarten Backetagen 19, 20, 21, 22 verhindert.

Gleichzeitig bewirkt die Dichtung 16 zusammen mit den aus **Fig. 2** ersichtlichen, auf der ganzen Breite der Backkammer von Seitenwand 17 zur Seitenwand 18 verlaufenden Radiatoren 7, deren beheizte Breite sich auf den Bereich der Backplatten 10 beschränken kann, die Aufteilung des Backraums 6 in die Backetagen 19, 20, 21, 22.

Im Raum unterhalb der untersten Backetage 19 ist im dargestellten Ausführungsbeispiel der Erfindung zusätzlich eine Heizkammer 23 angeordnet, die einen Schwadenapparat 29 in bekannter Wannenausführung enthält, mit dem der für den Backprozess im allgemeinen erforderliche Wasserdampf erzeugt und der umgewälzten Heißluft zugeführt werden kann.

Die nach dem Passieren der Radiatoren 7 aus den türseitigen Öffnungen 12 der Radiatoren 7 über die Umlenkvorrichtung 13, 14 und 15 in die einzelnen Backetagen 19, 20, 21, 22 eingeleitete Heißluft strömt durch die einzelnen Backetagen 19, 20, 21, 22 nach hinten und gibt auf diesem Weg durch Konvektion und in turbulenter Umströmung der Backware 9 einen weiteren Teil ihrer Wärme unmittelbar an die gesamte freie Oberfläche der Backware 9 ab.

Da die bei 27 in die Radiatoren 7 einströmende Heißluft eine höhere Temperatur besitzt als die nach Durchströmung der Radiatoren 7 und Wärmeabgabe an die Radiatorwände 8 und 10 bei 12 aus den Radiatoren 7 ausströmende und erst danach den eigentlichen Backraum 6 passierende Heißluft, so erreichen die Radiatorwände 8 und 10 ebenfalls eine höhere Temperatur als der Backraum bei 6. Hierdurch wird zu der konvektiv im Backraum 6 übertragenen Wärme zusätzliche Wärme von den Radiatorflächen 8 an die Oberfläche der Backwaren 9 abgestrahlt. Die so erzeugte Kombination aus konvektiver Wärmeübertragung und Wärmeübertragung durch Strahlung führt zu einem erfindungsgemäß vorteilhaften und für die Qualität der Backware 9 förderlichen Backvorgang.

Gleichzeitig wird damit auch die Aufgabe gelöst, in einem Umluftbackofen den Boden der Backware 9 in derselben Qualität wie bei den bekannten Backöfen mit Strahlungswärmeübertragung auszubilden. Wie in einem Backofen mit Strahlungswärmeübertragung liegt auch beim Backofen gemäß der Erfindung die Backware 9 mit ihrem Boden direkt auf der heißen Backplatte 10 auf, deren Wärmeleitwiderstand in der oben beschriebenen Weise durch die in den Radiatoren 7 höher temperierte Heizluft jedoch überkompensiert wird, wodurch die Backplatte 10 die zum vollständigen Ausbacken des Backgutbodens erforderliche, im Vergleich zum Backraum 6 erhöhte Temperatur erhält.

Aus dem Backraum 6 bzw. aus den Backetagen 19, 20, 21, 22 wird die Heizluft mittels auf der Breite der Backetage 19, 20, 21, 22 verteilten Durchführungen 25, dicht abgetrennt von Vorlauf und Verteilerkammer 5, zum Sammelkanal 26 geführt und von dort über die Ansaugöffnung wieder zum Umluftgebläse 1 geleitet, womit der Umluftkreislauf geschlossen ist.

Die Verbindung 24 zwischen Gehäuse 28 des Umluftgebläses 1 und dem Luftraum außerhalb des Backofens dient zum Druckausgleich sowie gleichzeitig zur Abführung überschüssiger Volumina, welche beim Aufheizen der Umluft, beim Bedampfen mittels Schwadenapparat 29 und durch den beim Backvorgang aus der Backware 9 austretenden Wasserdampf entstehen.

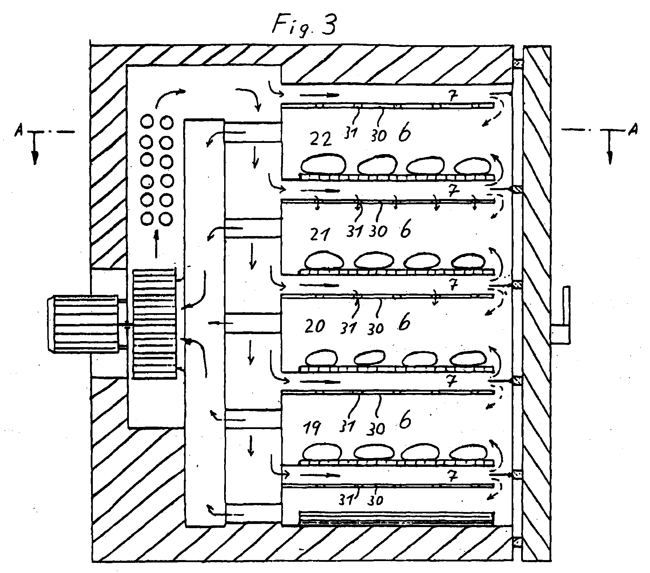

Ein alternatives Ausführungsbeispiel der Erfindung ist in **Fig. 3** dargestellt. Die jeweils nach unten weisenden Wände 30 der Radiatoren 7 sind in dieser Ausführung der Erfindung mit Durchbrüchen bzw. Ausströmöffnungen 31 versehen, welche zu einer gleichmäßigeren Temperaturverteilung im Backraum 6 bzw. in den Backetagen 19, 20, 21, 22 führen, sollte der Temperaturabfall der zuerst durch die Radiatoren 7 nach vorne und dann durch den Backraum 6 nach hinten geführten Heißluft zu groß werden. Der durch den Backraum 6 nach hinten strömenden, bereits abgekühlten Heißluft wird durch die Öffnungen 31 jeweils eine Teilmenge heißerer Heizluft beigemischt, was zu einer über die ganze Backfläche der jeweiligen Etage 19, 20, 21, 22 gleichmäßigeren Temperaturverteilung führt; Bedingung für einen gleichmäßigen Backvorgang und einheitlichen Bräunungsgrad des Backguts.

## Patentansprüche

1. Backofen zum Backen von Teigrohlingen mit einem Backraum, zumindest einer Backetage und zumindest zwei beheizbaren Radiatoren,
dadurch **gekennzeichnet**,
dass die Teigrohlinge (9) im Backraum (6) durch Heißluft (4) im Bereich ihrer freiliegenden Oberfläche durch turbulente Konvektion und gleichzeitig von einer ersten Radiatorwand (8) mittels Wärmestrahlung sowie an ihrer Bodenfläche von einer zweiten Radiatorwand (10) durch Wärmeleitung mit Wärmeenergie beaufschlagbar sind.

2. Backofen nach Anspruch 1,
dadurch **gekennzeichnet**,
dass eine erste Radiatorwand (8) die Decke einer Backetage bildet.

3. Backofen nach Anspruch 1 oder 2,
dadurch **gekennzeichnet**,
dass eine zweite Radiatorwand (10) eine Backplatte bildet, auf der die Teigrohlinge (9) unmittelbar auf zur Auflage bringbar sind.

4. Backofen nach einem der Ansprüche 1 bis 3,
dadurch **gekennzeichnet**,
dass die Radiatoren (7) jeweils von einem Heißgasstrom durchströmbar sind.

5. Backofen nach Anspruch 4,
dadurch **gekennzeichnet**,
dass der einen Radiator (7) durchströmende Heißgasstrom nach dem Passieren des Radiators (7) jeweils in eine Backetage (19, 20, 21, 22) einleitbar ist.

6. Backofen nach Anspruch 4 oder 5,
dadurch **gekennzeichnet**,
dass die Durchflussmenge des in eine Backetage (19, 20, 21, 22) geleiteten Heißgasstroms einstellbar ist.

7. Backofen nach einem der Ansprüche 4 bis 6,
dadurch **gekennzeichnet**,
dass der Heißgasstrom nach dem Passieren des Radiators (7) in einstellbarem Massenstromverhältnis auf verschiedene Backetagen (19, 20, 21, 22) verteilbar ist.

8. Backofen nach einem der Ansprüche 4 bis 7,
dadurch **gekennzeichnet**,
dass das Verhältnis der Verteilung des Heißgasstroms auf verschiedene Backetagen (19, 20, 21, 22) mittels eines verstellbaren Umlenkelements (14) einstellbar ist.

9. Backofen nach einem der Ansprüche 4 bis 8,
dadurch **gekennzeichnet**,
dass die Betätigung der Verstellung des Umlenkelements (14) von außerhalb des Backofens erfolgt.

10. Backofen nach einem der Ansprüche 1 bis 9,
dadurch **gekennzeichnet**,
dass die eine Backplatte (10) bildende zweite Radiatorwand herausnehmbar ausgebildet ist.

11. Backofen nach Anspruch 10,
dadurch **gekennzeichnet**,
dass die eine Backplatte (10) bildende zweite Radiatorwand gegen eine Backplatte von unterschiedlicher Dicke austauschbar ist.

12. Backofen nach Anspruch 10 oder 11,
dadurch **gekennzeichnet**,
dass die eine Backplatte (10) bildende zweite Radiatorwand gegen eine Backplatte (10) aus einem anderen Material, insbesondere Stein, austauschbar ist.

13. Backofen nach einem der Ansprüche 1 bis 12,
dadurch **gekennzeichnet**,
dass die Teigrohlinge (9) mittels eines separaten Backgutträgers auf die Backplatte (10) aufsetzbar sind.

14. Backofen nach einem der Ansprüche 1 bis 13,
dadurch **gekennzeichnet**,
dass die eine Decke der Backetage (19, 20, 21, 22) bildende zweite Radiatorwand (30) eine Vielzahl von Durchbrüchen (31) zum Durchlass einer Teilströmung des den Radiator (7) durchströmenden Heißgasstroms in die Backetage (19, 20, 21, 22) aufweist.

15. Backofen nach einem der Ansprüche 1 bis 14,
dadurch **gekennzeichnet**,
dass zwischen den Backetagen (19, 20, 21, 22) horizontal verlaufende Dichtungen (16) zur Unterbindung von Leckströmungen zwischen benachbarten Backetagen (19, 20, 21, 22) angeordnet sind, die an der Innenseite der Backofentür (11) zur Anlage bringbar sind.
